# EUROPÄISCHE PATENTSCHRIFT

(11) **EP 0 377 172 B1**
(45) Veröffentlichungstag und Bekanntmachung des Hinweises auf die Patenterteilung: **28.07.1993**
(21) Anmeldenummer: 89123628.3
(22) Anmeldetag: 21.12.1989
(51) Int. Cl.: B29C 45/67

(54) **Schliesseinrichtung an der Formspanneinheit einer Kunststoff-Spritzgiessmaschine**
Locking unit on the mould-clamping device of a plastic injection moulding machine
Dispositif de fermeture à l'unité de fixation de moules d'une machine à mouler par injection des matières plastiques

(30) Priorität: 31.12.1988 DE 3844432
(43) Veröffentlichungstag der Anmeldung: 11.07.1990
(73) Patentinhaber: Hehl, Karl, 72290 Lossburg (DE)
(72) Erfinder: Hehl, Karl, 72290 Lossburg (DE)
(74) Vertreter: Mayer, Friedrich E.

(56) Entgegenhaltungen:
- EP-A- 0 281 330

## Beschreibung

Die Erfindung betrifft eine Schließeinrichtung entsprechend dem Oberbegriff des Patentanspruches 1.

Eine bekannte Schließeinrichtung dieser Art (DE 36 44 181 C1) ermöglicht relativ hohe Arbeitsgeschwindigkeiten, weil beim Betrieb dank des Ausgleichzylinders nahezu das gesamte Drucköl innerhalb der Schließeinrichtung verbleibt. Neben einem einzigen zentralen Druckzylinder sind zwei diametrale Ausgleichszylinder vorgesehen. Die Anordnung des Antriebszylinders in einer zentralen Ausnehmung der Kolbenstange des Druckzylinders und die Ausbildung des eigentlichen Zylinders des Druckzylinders als Stahlhülse erschweren die Zufuhr des Druckmediums zu dem den Überströmkanal im Druckkolben steuernden Ventil.

Bekannt ist auch eine Schließeinrichtung, bei welcher zwei topfartige, gußeiserne Druckzylinder diametral zu einem zentralen topfartigen gußeisernen Ausgleichzylinder frei tragend an einer gießformseitigen Montageplatte befestigt sind. In jedem Druckzylinder ist ein hydraulisch abgesonderter Antriebszylinder angeordnet. Der Ventilkörper des den Überströmkanal im Druckkolben steuernden Ventils wird aus dem Hockdruckraum heraus in Schließstellung und aus einem Zylinderraum heraus in Offenstellung gesteuert. Eine solche Bau- bzw. Verfahrensweise schränkt die Steuergeschwindigkeit ein. Außerdem ist es in der Praxis sehr schwierig, die Antriebsbewegungen zweier Antriebszylinder ausreichend zu synchronisieren (EP 0281329 - Fig. 8). Hiervon ausgehend liegt der Erfindung die Aufgabe zugrunde, eine Schließeinrichtung der eingangs genannten Art derart weiterzubilden, daß sie bei raumsparendem Aufbau kostengünstiger gefertigt werden kann.

Diese Aufgabe wird erfindungsgemäß durch die im Patentanspruch 1 genannten Merkmale gelöst.

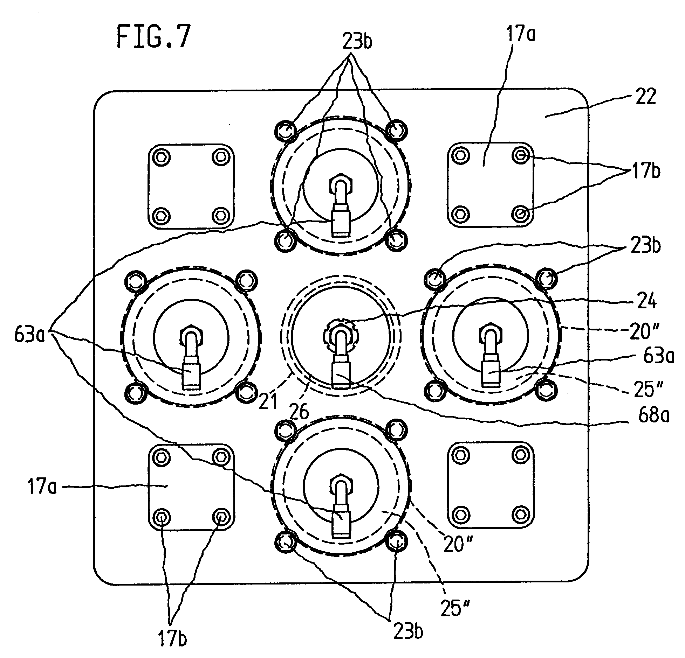

Dabei können die Niederdruckräume dank der antriebszylinderfreien und darum geringer dimensionierten Kolbenstangen der Druckzylinder größere Volumina aufweisen. Dadurch ergeben sich günstigere Voraussetzungen für die Entsprechung: Volumina Niederdruckräume plus Volumen Ausgleichszylinder gleich Volumina Hochdruckräume. Nicht zuletzt liegen bei der erfindungsgemäßen Ausbildung die prinzipiellen Voraussetzungen für eine bedarfsweise Aufstockung der Zuhaltedrücke durch weitere Druckzylinder (Fig. 7) vor, ohne daß hierdurch die kostengünstige Serienfertigung nennenswert beeinträchtigt würde.

Bei einer Ausbildung nach Anspruch 2 wird prinzipiell nur ein einziger Antriebszylinder vorgesehen. Durch die geringere Dimensionierung der Kolbenstangen ergibt sich dabei die fertigungstechnisch günstige Möglichkeit einer Versorgung der die Überströmkanäle in den Druckkolben steuernden Ventile über zentrale Bohrungen in den Kolbenstangen, und zwar derart, daß der Schließhub der Ventile aus deren eigentlichen Zylinderräumen heraus erfolgen kann. Dies gewährleistet eine extrem hohe Arbeitsgeschwindigkeit der Ventile. Bei Verwendung von Stahlhülsen für die eigentlichen Zylinder können die bedarfsweisen Varianten unterschiedlicher Zuhaltedrücke auf Grund eines Bauteile-Sortiments (Stahlrohre, Kolbenumfangsteile, Kolbenkerne, Kolbenstangen) gefertigt werden. Die Beschränkung auf einen einzigen Antriebszylinder schließt die Schwierigkeiten einer Überbeanspruchung der Gleitlager, die aus einer mangelnden Synchronisation paralleler Antriebszylinder resultieren, prinzipiell aus.

Ein besonders kompakter Aufbau der Schließeinrichtung ergibt sich bei einer Ausbildung nach den Patentansprüchen 3 und 4, wobei sich bei eine Ausbildung nach Patentanspruch 4 eine Vereinfachung der Fertigung insofern ergibt, als die rhytmischen, axialen Dehnungen der Führungssäulen durch entsprechende Axialbewegungen in der Gleitmuffe der Stützplatte ausgeglichen werden können. Dadurch erübrigen sich die bisher notwendigen Kompensationseinrichtungen bei Abstützung einer fest mit den Führungssäulen verbundenen Stützplatte auf dem Maschinenfuß.

Nachstehend wird die Erfindung anhand der Zeichnung erläutert. Es zeigen:
- Fig. 1: Die Schließeinrichtung in Seitenansicht,

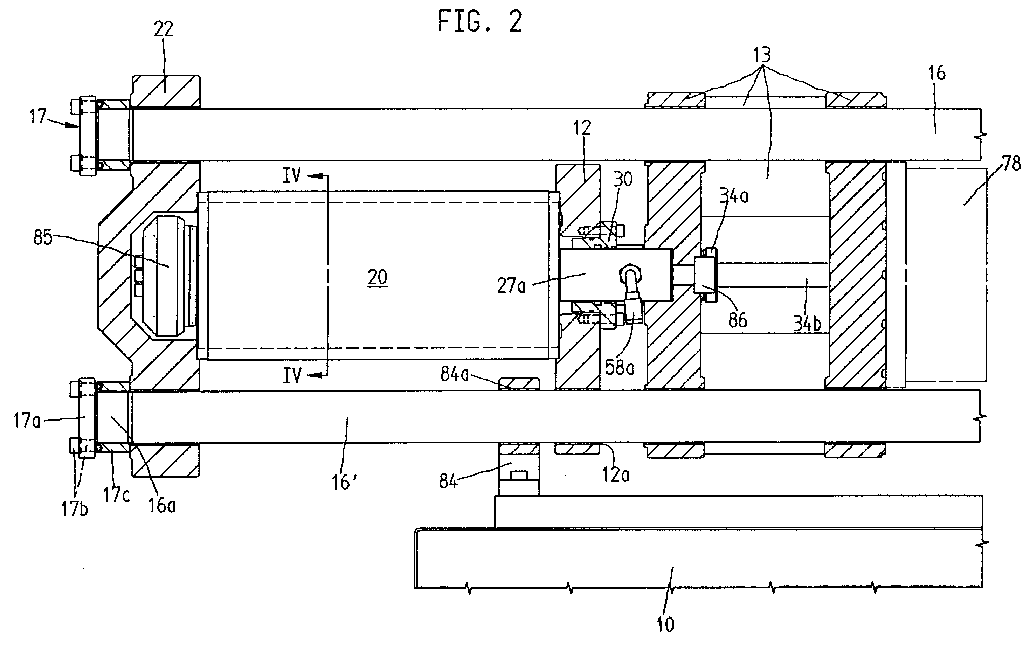

- Fig. 2: die Schließeinrichtung in teilweisem Schnitt nach Linie II-II von Fig. 3 in vergrößerter Darstellung (Führungssäulen nicht geschnitten),
- Fig. 3,3a: die Schließeinrichtung im horizontalen Schnitt durch ihre Symmetrieachse, (Fig. 3a bei geschlossener Sprizgießform und auf den Zylinderdeckel aufgelaufenen Stiften 88),
- Fig. 4: einen Schnitt nach Linie IV-IV von Fig. 2,
- Fig. 5: die Anordnung gemäß Fig. 4 im Vertikalschnitt,
- Fig. 6: die Schließeinrichtung in Rückansicht,
- Fig. 7: eine Variante der Schließeinrichtung mit vier Druckzylindern in einer Darstellung gemäß Fig. 6 und
- Fig. 8: die hydraulischen Kreisläufe der Schließeinrichtung in schematischer Darstellung.

Die Schließeinrichtung ist in eine Formschließeinheit integriert, deren tragendes Skelett aus dem stationären Formträger 11, eine mehrere hydraulische Zylinder abdeckenden rückseitigen Zylinderdeckel 22 und vier Führungssäulen 16,16' besteht. Die Führungssäulen bilden mit dem stationären Formträger 11 und dem Zylinderdeckel 22 einen starren Rahmen. Der auf den Führungssäulen 16,16' verschiebliche kastenartige Formträger 13 umfaßt zwei im Abstand voneinander befindliche Platten, die über Stützrippen miteinander verbunden sind. Befestigungseinrichtungen 17 zur Verbindung der Führungssäulen 16,16' mit dem stationären Formträger 11 bzw. mit dem rückseitigen Zylinderdeckel 22 umfassen je eine Widerlagerplatte 17a, Gewindebolzen 17b und eine Gewindehülse 17c. Das Innengewinde der Gewindehülse steht mit einem Außengewinde der zugehörigen Führungssäule 16,16' im Eingriff. Die an den Widerlagerplatten 17a abgestützten Gewindebolzen 17b befinden sich mit dem Zylinderdeckel 22 bzw. mit dem stationären Formträger 11 im Eingriff. Die Widerlagerplatten 17a sind ihrerseits an den benachbarten Gewindehülsen 17c abgestützt, befinden sich jedoch im Abstand von den Stirnflächen der zugehörigen Führungssäulen 16,16'. Diese durchgreifen den Zylinderdeckel 22 bzw. den Formträger 11 mit Spiel. Die Gewindebolzen 17b verspannen somit die an ihren Führungssäulen 16,16' axial festgelegten Gewindehülsen 17c mit dem benachbarten Zylinderdeckel 22 bzw. mit dem stationären Formträger 11. In der Symmetrieachse a-a der Formschließeinheit ist ein einziger hydraulischer Antriebszylinder 27,47b zum Schließen und Öffnen der Spritzgießform 78 angeordnet. Der Antriebszylinder 27,47b liegt koaxial innerhalb eines Ausgleichzylinders 21,26 und bildet die Kolbenstange dieses Ausgleichzylinders, auf welchem der Kolben 26 sitzt. Die Kolbenstange 47 des Antriebszylinders 27,47b ist rückseitig mittels Gewindemuttern 24 am Zylinderdeckel 22 axial festgelegt, der sämtliche hydraulische Zylinder der Schließeinrichtung rückseitig überdeckt. Diametral zum Ausgleichszylinder 21,26 sind zwei hydraulische Druckzylinder 20,25 zum Aufbau des Zuhaltedruckes für die Spritzgießform 78 angeordnet. Die Achsen der Druckzylinder 20,25 liegen in einer horizontalen Ebene. Die Druckkolben 25 der Druckzylinder 20,25 sind über Kolbenstangen 28 mit dem bewegbaren Formträger 13 verbunden. Die vom Druckkolben begrenzten Zylinderräume, nämlich der Hockdruckraum 52 und der Niederdruckraum 50 sind über Überströmkanäle 42 miteinander verbunden. Die Überströmkanäle 42 sind mittels eines hydraulisch betätigbaren Ventils durch einen ringförmigen Ventilkörper 43 absperrbar. Der Ausgleichsraum 51 des Ausgleichzylinders 21,26 steht mit den Niederdruckräumen 50 über Überströmkanäle 68b in offener Verbindung. Der Ausgleichsraum 51 dient der Aufnahme bzw. Abgabe von aus den Druckzylindern 20,25 kommenden oder an diese abzugebenden Drucköl. Der Kolben 47b des Antriebszylinders 27, 47b trennt einen gießformseitigen Zylinderraum 48 von einem rückseitigen Zylinderraum 80, der rückseitig mittels einer Dichtungshülse 44 abgeschlossen ist.

Die durch Stahlhülsen 20,21 gebildeten eingentlichen Zylinder der Druckzylinder 20,25 und des Ausgleichzylinders 21,26 sind mittels gemeinsamer Zylinderdeckel 22,12 zu einem kompakten Aggregat zusammengefaßt. Die Stahlhülsen 20,21 enden beidseits in einer senkrecht zur Symmetrieachse a-a stehenden Ebene. Der Antriebszylinder 27,47b ist von der Stahlhülse 21 des Ausgleichzylinders 21,26 koaxial umschlossen. Der eigentliche Zylinder 27 des Antriebszylinders 27,47b durchsetzt den Kolben 26 des Ausgleichzylinders und erstreckt sich in eine Einformung des rückseitigen gußeisernen Zylinderdeckels 22 hinein. Der bewegbare Formträger 13 ist auf den vier Führungssäulen 16,16' geführt. Zwei untere Führungssäulen 16' liegen in einer horizontalen Ebene. Sie durchsetzen den gießformseitigen Zylinderdeckel 12 über dessen Gleitmuffen 12a. Die unteren Führungssäulen 16' sind ferner im Abschnitt zwischen den Zylinderdeckeln 22,12 mittels einer vertikalen Stützplatte 84 auf dem Maschinenfuß 10 abgestützt. Die Stützplatte 84 ist von den Führungssäulen 16' über Gleitmuffen 84a durchgriffen. Die Druckkolben 25 sind je aus einem an der Stahlhülse 20 gleitenden Umfangsteil und einem sich in eine Einformung des Zylinderflansches 22 hinein erstreckenden Kern 25' zusammengesetzt. Auf der Mantelfläche des Kerns 25' ist der zugehörige ringförmige Ventilkörper 43 gleitbar gelagert, der aus dem Zylinderraum 61 heraus durch Beaufschlagung in Schließstellung steuerbar ist. Die Stahlrohre 20,21 der Druckzylinder 20,25 und des Ausgleichzylinders 21,26 liegen je entlang einer Mantellinie aneinander. Sie sind an den Zylinderdeckeln 22,12 zentriert. Die Kolbenstangen 28 der Druckzylinder 20,25 sind gießformseitig in entsprechenden Ausnehmungen des bewegbaren Formträgers 13 und rückseitig in entsprechenden Ausnehmungen der Kerne 25' der Druckkolben 25 zentrierend aufgenommen. Die Zuführkanäle 58 zu den Zylinderräumen 61 umfassen Kanalbohrungen in den Kolbenstangen 28 und den Kernen 25'. Die Anschlüsse 58a für diese Kanalbohrungen sind am Mantel der Kolbenstangen 28 im Abschnitt zwischen dem bewegbaren Formträger 13 und dem gießformseitigen Zylinderdeckel 12 angeordnet. Der Kolben 26 des Ausgleichzylinders 26,21 ist an einer Ringschulter des eigentlichen Zylinders 27 des Antriebszylinders 27,47b befestigt. Diese Ringschulter ist durch den Übergang des Zylinders 27 in einen rückwärtigen Abschnitt geringeren Durchmessers gebildet. An den rückseitigen Stirnflächen der Kerne 25' liegt je ein topfförmiger Körper 85 an, der den Kern 25' mit einem Axialflansch mit Spiel partiell übergreift. Der Axialflansch begrenzt den Zylinderraum 61 des Ventils. In Offenstellung gelangt der Ventilkörper 43 durch Beaufschlagung aus dem Hochdruckraum 52. Die mittels Schraubenbolzen 86 am bewegbaren Formträger befestigten Kolbenstangen 28 der Druckzylinder 25,20 sowie der Antriebszylinder 27,47b durchsetzen den Zylinderdeckel 22 in Dichtungshülsen 30,29.

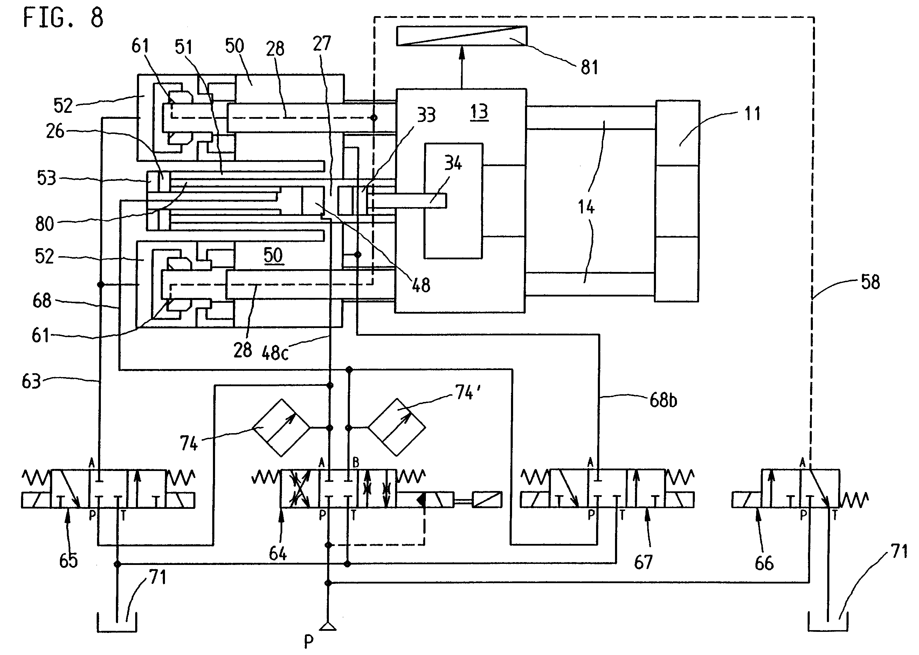

Der hydraulisch passive Raum 53 des Ausgleichzylinders 21,26 steht über Radialbohrungen 83 im Zylinderdeckel 22 mit der Atmosphäre in Verbindung. Ein die Bewegungen des Formträgers 13 fassender Streckenspannungswandler 81 ist seitlich an diesem Formträger angeordnet, wie aus Fig. 8 ersichtlich.

Der Zylinderraum 61 ist mit der Druckleitung P bzw. mit dem Tank 71 mit Hilfe eines Schiebers 66 über der Verbindungskanal 58 und die Kanalbohrungen in den Kolbenstangen 28 in Verbindung setzbar.

Der Zylinderraum 80 ist mit der Druckleitung P über die Verbindungsleitung 68 und das Regelventil 64 in Verbindung setzbar.

Der Hochdruckraum 52 ist mit dem beim Schließen der Spritzgießform 78 mit der Druckleitung P verbundenen Verbindungskanal 48c mit Hilfe eines Mehrwegschiebers 65 über einen Verbindungskanal 63 in Verbindung setzbar.

Der gießformseitige Zylinderraum 48 des Antriebszylinders 27,47b ist über den Verbindungskanal 48c mit der Druckleitung P mit Hilfe des Regelventils 64 in Verbindung setzbar.

Die über die Überströmkanäle 68b' miteinander kommunizierenden Zylinderräume 50,51 der Druckzylinder 20,25 und des Ausgleichzylinders 21,26 sind mit der Druckleitung P mit Hilfe des Regelventils 64 und des Schiebers 67 über einen Verbindungskanal 68b' verbindbar. Die Niederdruckräume 50 sind mittels Mehrwegeschieber 67 zum Tank 71 schaltbar.

Der gießformseitige Endabschnitt 27a des Zylinders 27 bildet mit einem Kolben 33 eine Kolben-Zylinder-Einheit für den Antrieb einer Auswerferstange 34b in der Spritzgießform 78. Die Auswerferstange 34b steht über eine Kupplung 34a mit der Kolbenstange des Kolbens 33 in Verbindung. Der rückseitige Zylinderraum der Kolben-Zylinder-Einheit ist über einen Anschluß 57a und eine Bohrung im Zylinder 27 mit Druckmedium beschickbar. Die Kolbenstange 34 ist in einer Büchse 87 des bewegbaren Formträgers geführt.

Wie die Fließwege des Drucköls beim Öffnen der Spritzgießform mit kleiner Kraft, bzw. mit großer Kraft, beim Schließen der Spritzgießform und bei deren Zuhalten verlaufen, ist im einzelnen aus der gattungsgemäßen, bekannten Schließeinrichtung (DE 36 44 181 C1) zu entnehmen. Die Bezugszeichen in der genannten Patentschrift entsprechen den Bezugszeichen in der vorliegenden Beschreibung.

Die Variante der Schließeinrichtung gemäß Fig. 7 ist mit vier Druckzylindern 20'',25'' versehen, die paarweise in einer horizontalen bzw. vertikalen, durch die Symmetrieachse a-a gehenden Ebene angeordnet sind.

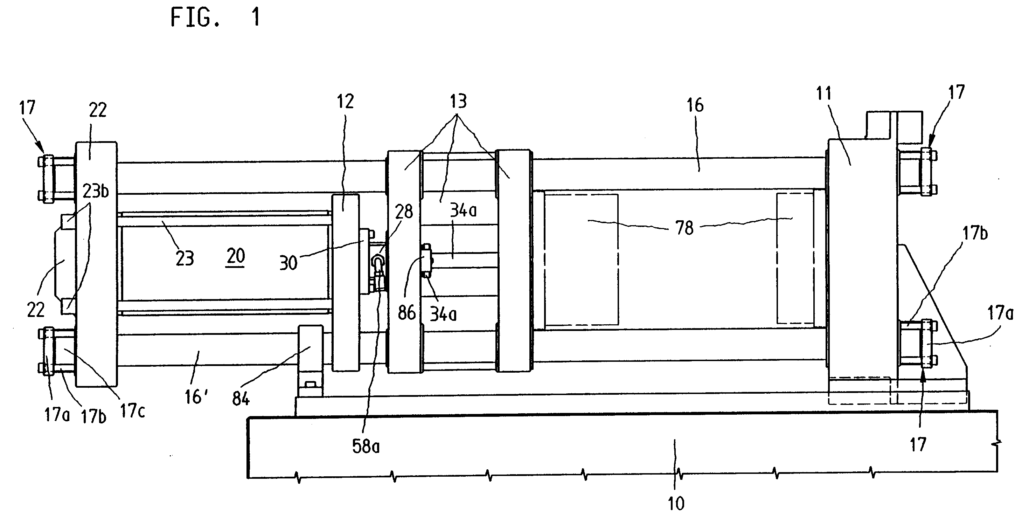

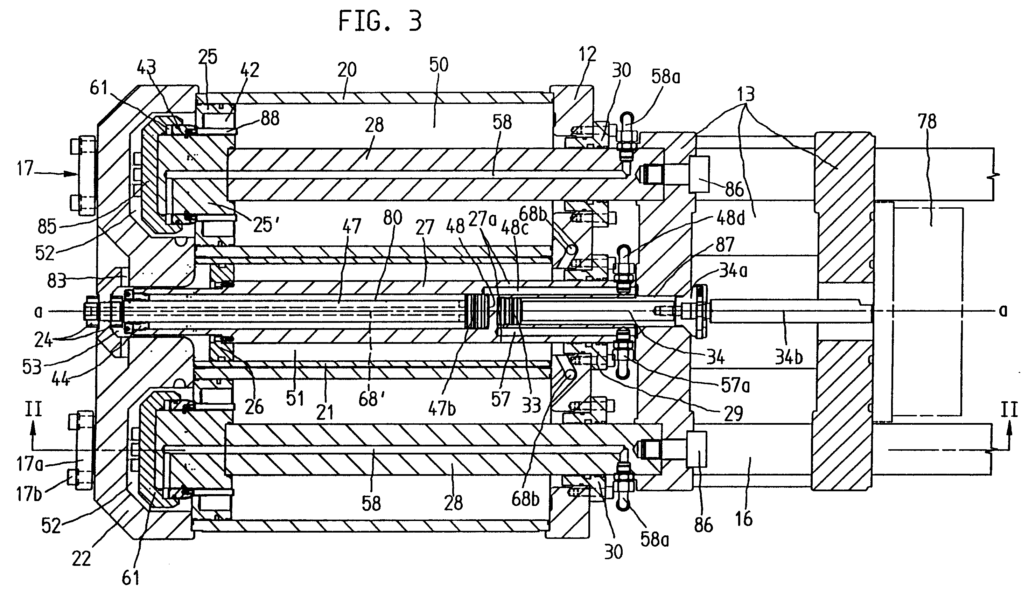

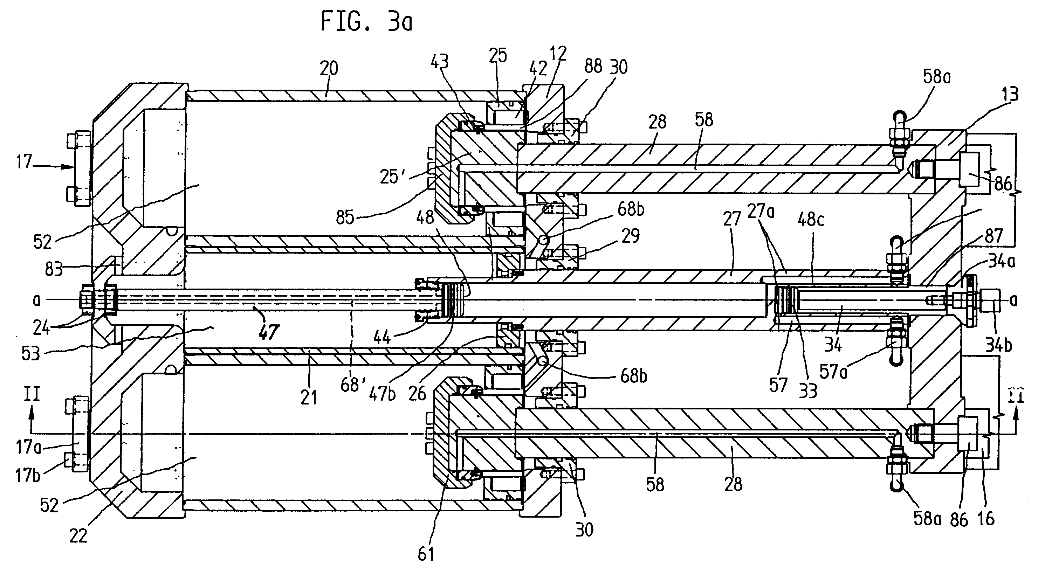

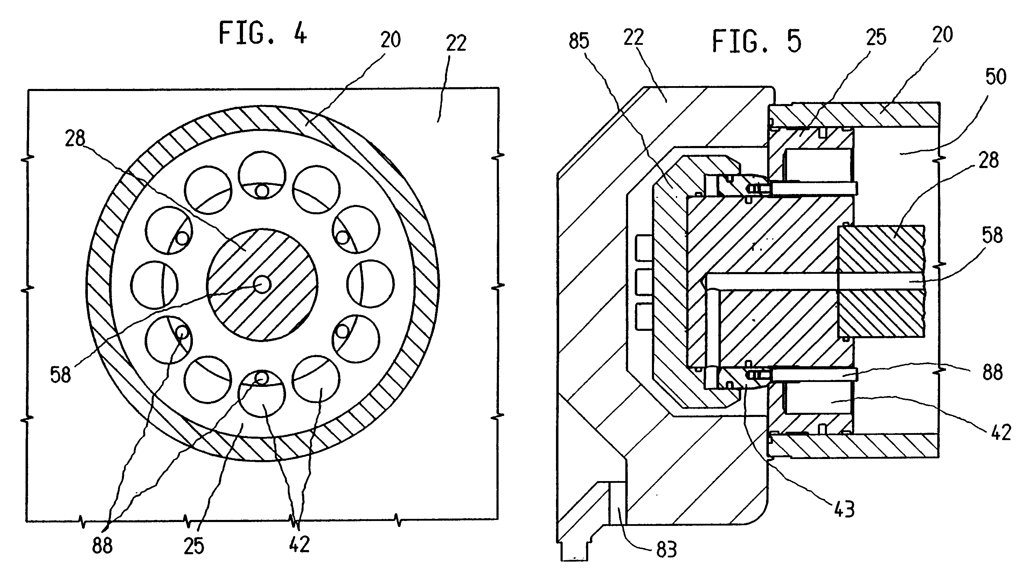

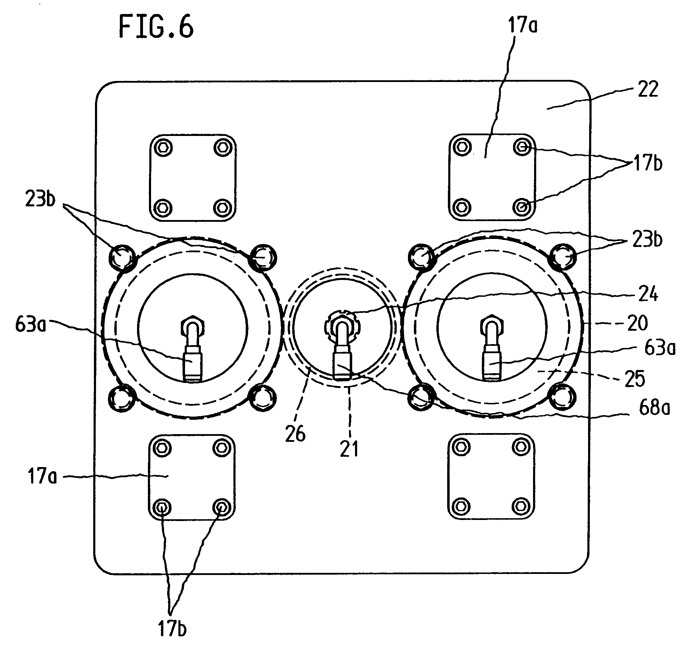

Wie aus den Fign. 3,3a in Verbindung mit den Fign. 4,5 ersichtlich, sind im Ventilkörper 43 parallel zur Symmetrieachse a-a angeordnete Stifte 88 verankert, welche die vertikale, gießformseitige Stirnfläche des Druckzylinders 25 bei in Schließposition befindlichem Ventilkörper 43 geringfügig überrangen. Diese Stifte 88 stellen sicher, daß bei geschlossenen Ventilen der Zuhaltedruck nicht mechanisch auf den gießformseitigen Zylinderdeckel 12 einwirken kann. Denn die die Zylinderdeckel 22,12 miteinander verbindenden Haltestangen 23 (Fig. 1,6,7) mit Köpfen 23b sind für eine solch starke Belastung nicht ausgelegt. Im normalen Spritzbetrieb gelangen die Spritzgießform 78 und die Ventilkörper 43 zum Aufbau des Zuhaltedruckes je in Schließstellung, bevor die Druckkolben 25 auf den Zylinderdeckel 12 auftreffen und diesen dadurch mit dem Zuhaltedruck belasten. Es kann jedoch beispielsweise durch einen Fehler im Programm des Rechners oder beim Übergang auf eine Spritzgießform geringerer Tiefe ohne entsprechende Änderung des Programms vorkommen, daß die Druckkolben auf den Zylinderdeckel 12 auffahren, bevor die Spritzgießform 78 geschlossen ist. In diesem Falle werden die Ventile durch das Auflaufen der Stifte 88 auf den Zylinderdeckel 12 zwangsweise geöffnet, so daß der Zuhaltedruck nicht aufgebaut werden kann und eine entsprechende Schädigung der Schließeinrichtung nicht eintreten kann.

Der vom Regelventil 64 zum Zylinderraum 80 des Antriebszylinders 27,47b führende Verbindungskanal 68 ist mittels eines Mehrwegeschiebers 67 über einen abzweigenden Verbindungskanal 68b mit den Niederdruckräumen 50 in Verbindung setzbar. Dies für den Fall, daß die Kraft des Antriebszylinders nicht ausreicht, den aus einer 'Verklebung' der Spritzgießform resultierenden Widerstand zu brechen. Sobald die 'Verklebung' aufgehoben ist, wird die Gießform mit Hilfe des Antriebszylinders, wie im Normalfall, geöffnet.

Die Leitungen 63 münden über Anschlüsse 63a in die Hochdruckräume 52. Die Leitung 68 mündet über einen Anschluß 68a in den durch eine Kanalbohrung in der Kolbenstange des Antriebszylinders gebildeten Endabschnitt 68' dieser Verbindungsleitung.Mit dem Bezugszeichen 57 sind die Zuführkanäle für die Auswerfereinrichtung bezeichnet.

## Patentansprüche

1. Schließeinrichtung an der Formspanneinheit einer Kunststoff-Spritzgießmaschine mit hydraulischem Druckzylinder (20, 25) zum Aufbau des Zuhaltedrucks, dessen Druckkolben (25) über eine Kolbenstange (28) mit dem bewegbaren Formträger (13) verbunden ist und dessen Hochdruckraum (52) über wenigstens einen Überströmkanal (42) mit dem Niederdruckraum (50) in Verbindung steht, mit wenigstens einem symmetrisch zur Symmetrieachse (a-a) angeordneten hydraulischen Antriebszylinder (27, 47b) zum Schließen und Öffnen der Spritzgießform (78) mit einem, mit dem Niederdruckraum (50) in offener Verbindung stehenden Ausgleichszylinder (21, 26) mit Ausgleichsraum (51), wobei die Volumina von Niederdruck- plus Ausgleichsraum (50, 51) etwa dem Volumen des Hochdruckraumes (52) entsprechen,
dadurch gekennzeichnet, daß der Antriebszylinder (27, 47b) vom Ausgleichszylinder (21, 26) koaxial umschlossen ist, dessen Kolben (26) auf dem eigentlichen Zylinder (27) des Antriebszylinders (27, 47b) sitzt und daß wenigstens zwei Druckzylinder (20,25) symmetrisch zum Antriebszylinder (27, 47b) angeordnet sind.

2. Schließeinrichtung nach Patentanspruch 1, dadurch gekennzeichnet, daß der im Druckkolben (25) angeordnete, mittels Ventil (Ventilkörper 43) absperrbare Überströmkanal (42) mit dem Niederdruckraum und dieser seinerseits mit dem, mit dem Formträger (13) über eine Kolbenstange verbundenen Ausgleichszylinder (21, 26) in Verbindung steht, daß ein Antriebszylinder (27, 47b) in der Symmetrieachse (a-a) angeordnet ist und daß die durch Stahlhülsen (20, 21) gebildeten eigentlichen Zylinder von Druck- und Ausgleichszylinder (20, 25; 21, 26) mittels gemeinsamer Zylinderdeckel (22, 12) zu einem kompakten Aggregat zusammengefaßt sind.

3. Schließeinrichtung nach Patentanspruch 1 oder 2, dadurch gekennzeichnet, daß der eigentliche Zylinder (27) des Antriebszylinders (27, 47b) den Kolben (26) des Ausgleichszylinders (26, 21) durchsetzt und sich in eine Einformung des rückseitigen Zylinderdeckels (22) hinein erstreckt.

4. Schließeinrichtung nach einem der vorhergehenden Patentansprüche, dadurch gekennzeichnet, daß der bewegbare Formträger (13) auf vier Führungssäulen (16) geführt ist, die gießformseitig am stationären Formträger (11) und rückseitig am Zylinderdeckel (22) befestigt sind, von welchen Führungssäulen (16) zwei in einer horizontalen Ebene liegende untere Führungssäulen (16') den gießformseitigen Zylinderdeckel (12) zur Führung und Zentrierung durchsetzen und mittels einer vertikalen, zwischen den Zylinderdeckeln (22, 12) angeordnete Stützplatte (84) auf dem Maschinenfuß (10) abgestützt sind, welche Stützplatte (84) von den Führungssäulen (16') mittels Gleitmuffen (84a) gleitbar durchgriffen ist.

5. Schließeinrichtung nach einem der vorhergehenden Patentansprüche, dadurch gekennzeichnet, daß die Druckkolben (25) der Druckzylinder (20, 25) je aus einem an der Stahlhülse (20) gleitenden Umfangsteil und einem sich in eine Einformung des gußeisernen Zylinderdeckels (22) hinein erstreckenden Kern (25') zusammengesetzt sind, auf dessen Mantelfläche ein ringförmiger Ventilkörper (43) gleitbar gelagert und durch Beaufschlagung des Zylinderraumes (61) mit Medium in Schließrichtung steuerbar ist.

6. Schließeinrichtung nach einem der vorhergehenden Patentansprüche, dadurch gekennzeichnet, daß ein die Antriebsbewegungen des Antriebszylinders (27, 47b) über einen Streckenspannungswandler (81) regelndes Regelventil (64) vorgesehen ist, durch welches die Antriebsgeschwindigkeiten des Antriebszylinders (27, 47b) je bei gleichzeitiger, beidseitiger Druckbeeinflussung des Kolbens (47b) nach einem Mengenprogramm bestimmbar sind und daß in den zu den Zylinderräumen (80,48) des Antriebszylinders (27,47b) führenden Verbindungskanälen (48c,68) Druckfühler (74,74') für eine überlagernde Druckregelung angeordnet sind.

7. Schließeinrichtung nach Patentanspruch 6, dadurch gekennzeichnet, daß der vom Regelventil (64) zum Zylinderraum (80) des Antriebszylinders (27,47b) führende Verbindungskanal (68) mittels eines Mehrwegeschiebers (67) über einen abzweigenden Verbindungskanal (68b') mit den Niederdruckräumen (50) in Verbindung setzbar ist (für den Fall, daß die Kraft des Antriebszylinders nicht ausreicht, eine Verklebung zu überwinden).

8. Schließeinrichtung nach Patentanspruch 6 oder 7 , dadurch gekennzeichnet, daß der vom Regelventil (64) zum Zylinderraum (48) des Antriebszylinders (27,47b) führende und mit Druckfühler (74 ) versehene Verbindungskanal (48c) mittels Mehrwegeschieber (65) über einen abzweigenden Verbindungskanal (63) mit dem Hochdruckraum (52) in Verbindung setzbar und die Niederdruckräume (50) mittels Mehrwegeschieber (67) zum Tank (71) schaltbar ist (geregeltes Zuhalten der Spritzgießform mit einseitiger Druckmessung über den Druckfühler), wobei die mittels Druckfühler (74') geregelte Ablaufseite des Regelventils (64) über den Verbindungskanal (68) mit dem Zylinderraum (80) des Antriebszylinders (27, 47b) und mittels des Mehrwegschiebers (67) über den abzweigenden Verbindungskanal (68b') mit den Niederdruckräumen (50) in Verbindung setzbar ist.

9. Schließeinrichtung nach einem der vorhergehenden Patentansprüche, dadurch gekennzeichnet, daß sie mit vier Druckzylindern (20'', 25'') versehen ist, die paarweise in einer horizontalen bzw. vertikalen, durch die Symmetrieachse (a-a) gehenden Ebene angeordnet sind.

10. Schließeinrichtung nach einem der vorhergehenden Patentansprüche, dadurch gekennzeichnet, daß im Ventilkörper (43) verankerte, parallel zur Symmetrieachse (a-a) angeordnete Abstandsstifte (88) je die vertikale gießformseitige Stirnfläche des Druckkolbens (25) geringfügig überragen.

## Claims

1. Clamping unit on the mould closing unit of a plastics injection moulding machine with a hydraulic pressure cylinder (20, 25) for building up the locking pressure, whose pressure piston (25) is connected by a piston rod (28) to the movable mould carrier (13), and whose high-pressure chamber (52) communicates via at least one overflow passage (42) with the low-pressure chamber (50), with at least one hydraulic drive cylinder (27, 47b) disposed symmetrically with the axis of symmetry (a-a) for closing and opening the injection mould (78), with a buffer cylinder (21, 26) in open communication with the low-pressure chamber (50), with a buffer chamber (51), the volumes of low-pressure plus buffer chambers (50, 51) approximately corresponding to the volume of the high-pressure chamber (52), characterised in that the drive cylinder (27, 47b) is coaxially surrounded by the buffer cylinder (21, 26), whose piston (26) sits on the actual cylinder (27) of the drive cylinder (27, 47b), and in that at least two pressure cylinders (20, 25) are disposed symmetrically with the drive cylinder (27, 47b).

2. Clamping unit according to claim 1, characterised in that the overflow passage (42), disposed in the pressure piston (25) and closable by means of a valve (valve member 43) communicates with the low-pressure chamber, and the latter in turn communicates with the buffer cylinder (21, 26), connected to the mould carrier (13) by a piston rod, in that a drive cylinder (27, 47b) is disposed in the axis of symmetry (a-a), and in that the actual cylinders of the pressure- and buffer cylinders (20, 25; 21, 26) are combined into one compact unit by a common cylinder cover (22, 12).

3. Clamping unit according to claim 1 or 2, characterised in that the actual cylinder (27) of the drive cylinder (27, 47b) passes through the piston (26) of the buffer cylinder (26, 21), and extends into a recess in the rear cylinder cover (22).

4. Clamping unit according to one of the foregoing claims, characterised in that the movable mould carrier (13) is guided on four track rods (16) which are secured at the forward end on the stationary mould carrier (11) and at the rear on the cylinder cover (22), two lower track rods (16') of said track rods (16), lying on a horizontal plane, passing through the forward cylinder cover (12) in order to provide guidance and centering, and being supported by means of a vertical support plate (84) disposed between the cylinder covers (22, 12) on the machine pedestal (10), said support plate (84) being slidably penetrated by the track rods (16') by means of slide bearings (84a).

5. Clamping unit according to one of the foregoing claims, characterised in that the pressure pistons (25) of the pressure cylinders (20, 25) are each made up of a skirt sliding on the steel tube (20), and of a core (25') extending into a recess in the cast-iron cylinder cover (22), an annular valve member (43) being slidably mounted on the external surface of said core (25') and being controllable by the application of pressure medium to the cylinder chamber (61) in the closing direction.

6. Clamping unit according to one of the foregoing claims, characterised in that there is provided a regulating valve (64) regulating the driving movements of the drive cylinder (27, 47b) via a displacement sensor (81), and by means of which the drive speeds of the drive cylinder (27, 47b) may each be determined, with simultaneous pressure influence on both sides of the piston (47b) in accordance with a flow program, and in that pressure sensors (74, 74') for a superimposed pressure regulation are disposed in the communicating passages (48c, 68) leading to the cylinder chambers (80, 48) of the drive cylinder (27, 47b).

7. Clamping unit according to claim 6, characterised in that a communicating passage (68) leading from the regulating valve (64) to the cylinder chamber (80) of the drive cylinder (27, 47b) may be brought into communication with the low-pressure chambers (50) by means of a multidirectional valve (67) via a branching passage (68b') (in case the power of the drive cylinder is insufficient to overcome sticking).

8. Clamping unit according to claim 6 or 7, characterised in that the communicating passage (48c), leading from the regulating valve (64) to the cylinder chamber (48) of the drive cylinder (27, 47b), and supplied with a pressure sensor (74), may be brought into communication with the high-pressure chamber (52) by means of a multidirectional valve (65) via a branching passage (63), and the low-pressure chambers (50) may be connected by a multidirectional valve (67) with the reservoir (71) (regulated locking of the injection mould with pressure measurement at one end by the pressure sensor), the discharge side of the regulating valve (64), regulated by the pressure sensor (74'), being capable of being brought into communication via the communicating passage (68) with the cylinder chamber (80) of the drive cylinder (27, 47b), and, by means of the multidirectional valve (67), via the branching passage (68b') with the low-pressure chambers (50).

9. Clamping unit according to one of the foregoing claims, characterised in that it is provided with four pressure cylinders (20'', 25'') disposed in pairs in a horizontal or vertical plane passing through the axis of symmetry (a-a).

10. Clamping unit according to one of the foregoing claims, characterised in that spacer pins (88), secured in the valve member (43) and disposed parallel to the axis of symmetry (a-a), each project slightly beyond the vertical forward end face of the pressure piston (25).

## Revendications

1. Dispositif de fermeture d'une unité de serrage des moules d'une machine de moulage de matière plastique par injection, comprenant un vérin de poussée (20, 25) qui est destiné à établir la pression de verrouillage, dont le piston de poussée (25) est relié au porte-moule mobile (13) par l'intermédiaire d'une tige de piston (28) et dont la chambre à haute pression (52) est en communication avec la chambre à basse pression (50) par l'intermédiaire d'au moins un canal de trop-plein (42), comprenant au moins un vérin hydraulique d'entraînement (27, 47b) disposé symétriquement par rapport à l'axe de symétrie (a-a) pour fermer et ouvrir le moule de moulage par injection (78), et comprenant un vérin de compensation (21, 26) qui est en communication permanente avec la chambre à basse pression (50) et qui comporte une chambre de compensation (51), cependant que le volume de la chambre à basse pression augmenté du volume de la chambre de compensation (50, 51) correspond à peu près au volume de la chambre à haute pression (52), caractérisé par le fait que le vérin d'entraînement (27, 47b) est entouré d'une manière coaxiale par le vérin de compensation (21, 26) dont le piston (26) est monté sur le cylindre (27) du vérin d'entraînement (27, 47b), et par le fait qu'au moins deux vérins de poussée (20, 25) sont disposés symétriquement par rapport au vérin d'entraînement (27, 47b).

2. Dispositif de fermeture selon la revendication 1, caractérisé par le fait que le canal de trop-plein (42) qui est disposé dans le piston de poussée (25) et qui peut être fermé au moyen d'une valve (corps de valve 43) est en communication avec la chambre à basse pression, et que celle-ci l'est à son tour avec le vérin de compensation (21, 26) qui est relié au porte-moule (13) par l'intermédiaire d'une tige de piston, par le fait qu'un vérin d'entraînement (27, 47b) est disposé selon l'axe de symétrie (a-a), et par le fait que les cylindres des vérins de poussée et de compensation (20, 25 ; 21, 26), lesquels sont constitués par des manchons en acier (20, 21), sont assemblés au moyen de couvercles de cylindres communs (22, 12) pour former un ensemble compact.

3. Dispositif de fermeture selon la revendication 1 ou 2, caractérisé par le fait que le cylindre (27) du vérin d'entraînement (27, 47b) traverse le piston (26) du vérin de compensation (21, 26), et qu'il s'étend à l'intérieur d'un évidement ménagé dans le couvercle de cylindres arrière (22).

4. Dispositif de fermeture selon l'une des revendications précédentes, caractérisé par le fait que le porte-moule mobile (13) est guidé sur quatre colonnes de guidage (16) qui sont fixées au porte-moule fixe (11) du côté du moule et au couvercle de cylindres (22) à l'arrière, cependant que, parmi ces colonnes de guidage (16), deux colonnes de guidage inférieures (16') sont situées dans un plan horizontal et traversent le couvercle de cylindres (12) qui est situé du côté du moule à des fins de guidage et de centrage, et qu'elles sont appuyées sur le socle (10) de la machine au moyen d'une plaque d'appui verticale (84) disposée entre les couvercles de cylindres (22, 12), ladite plaque d'appui (84) étant traversée en glissement par les colonnes de guidage (16') par l'intermédiaire de manchons de coulissement (84a).

5. Dispositif de fermeture selon l'une des revendications précédentes, caractérisé par le fait que les pistons de poussée (25) des vérins de poussée (20, 25) sont constitués pour chacun par l'assemblage d'une partie périphérique qui glisse sur le manchon en acier (20) et d'un noyau (25') qui s'étend à l'intérieur d'un évidement ménagé dans le couvercle de cylindres en fonte (22) et sur la surface extérieure duquel est monté en glissement un corps de valve annulaire (43) qui peut être commandé en direction de la fermeture par alimentation en fluide de la chambre de cylindre (61).

6. Dispositif de fermeture selon l'une des revendications précédentes, caractérisé par le fait qu'il est prévu une valve de régulation (64) qui régule les déplacements d'entraînement du vérin d'entraînement (27, 47b) par l'intermédiaire d'un transducteur trajet-tension (81) et au moyen de laquelle les vitesses d'entraînement du vérin d'entraînement (27, 47b) peuvent être déterminées à chaque fois par influence simultanée de la pression sur les deux côtés du piston (47b) selon un programme portant sur les volumes, et par le fait que des capteurs de pression (74, 74') destinés à une régulation superposée de la pression sont disposés dans les canaux de liaison (48c, 68) qui conduisent aux chambres de cylindre (80, 48) du vérin d'entraînement (27, 47b).

7. Dispositif de fermeture selon la revendication 6, caractérisé par le fait que le canal de liaison (68) qui conduit de la valve de régulation (64) à la chambre de cylindre (80) du vérin d'entraînement (27, 47b) peut être mis en communication avec les chambres à basse pression (50) au moyen d'une valve à tiroir à plusieurs voies (67) et par l'intermédiaire d'un canal de liaison (68b') qui bifurque (au cas où la force du vérin d'entraînement ne suffit pas à surmonter un collage).

8. Dispositif de fermeture selon la revendication 6 ou 7, caractérisé par le fait que le canal de liaison (48c) qui conduit de la valve de régulation (64) à la chambre de cylindre (48) du vérin d'entraînement (27, 47b) et qui est pourvu d'un capteur de pression (74) peut être mis en communication avec la chambre à haute pression (52) au moyen d'une valve à tiroir à plusieurs voies (65) et par l'intermédiaire d'un canal de liaison (63) qui bifurque, et que les chambres à basse pression (50) peuvent être branchées sur le réservoir (71) au moyen de la valve à tiroir à plusieurs voies (67) (verrouillage régulé du moule de moulage par injection avec mesure de la pression d'un côté par l'intermédiaire du capteur de pression), cependant que le côté de l'évacuation de la valve de régulation (64) qui est régulé au moyen d'un capteur de pression (74') peut être mis en communication avec la chambre de cylindre (80) du vérin d'entraînement (27, 47b) par l'intermédiaire du canal de liaison (68), et avec les chambres à basse pression (50) au moyen de la valve à tiroir à plusieurs voies (67) et par l'intermédiaire du canal de liaison (68b') qui bifurque.

9. Dispositif de fermeture selon l'une des revendications précédentes, caractérisé par le fait qu'il est muni de quatre vérins de poussée (20'', 25''), lesquels sont disposés par paires dans un plan horizontal ou vertical, respectivement, qui passe par l'axe de symétrie (a-a).

10. Dispositif de fermeture selon l'une des revendications précédentes, caractérisé par le fait que des tiges d'écartement (88) qui sont ancrées dans le corps de valve (43) et qui sont disposées parallèlement à l'axe de symétrie (a-a) font à chaque fois légèrement saillie au-delà de la surface frontale verticale du piston de poussée (25) qui est située du côté du moule.
